(19) Europäisches Patentamt
European Patent Office
Office européen des brevets

(11) **EP 1 623 861 B1**

(12) **EUROPEAN PATENT SPECIFICATION**

(45) Date of publication and mention
of the grant of the patent:
**14.05.2008 Bulletin 2008/20**

(51) Int Cl.:
***B60H 1/32*** (2006.01)

(21) Application number: **05254575.3**

(22) Date of filing: **22.07.2005**

(54) **Air conditioning system for vehicles**

Fahrzeugklimaanlage

Système de climatisation pour véhicules

(84) Designated Contracting States:
**AT BE BG CH CY CZ DE DK EE ES FI FR GB GR HU IE IS IT LI LT LU LV MC NL PL PT RO SE SI SK TR**

(30) Priority: **03.08.2004 JP 2004226569**

(43) Date of publication of application:
**08.02.2006 Bulletin 2006/06**

(73) Proprietor: **Sanden Corporation
Isesaki-shi,
Gunma 372-8502 (JP)**

(72) Inventors:
• **Imai, Tomonori c/o Sanden Corporation
Gunma 372-8502 (JP)**
• **Tsubi, Masato c/o Sanden Corporation
Gunma 372-8502 (JP)**
• **Suzuki, Kenichi c/o Sanden Corporation
Gunma 372-8502 (JP)**

(74) Representative: **Haley, Stephen
Gill Jennings & Every LLP
Broadgate House
7 Eldon Street
London EC2M 7LH (GB)**

(56) References cited:
**US-A- 4 928 499**

• **PATENT ABSTRACTS OF JAPAN vol. 007, no. 020 (M-188), 26 January 1983 (1983-01-26) & JP 57 175422 A (NIPPON DENSO KK), 28 October 1982 (1982-10-28)**
• **PATENT ABSTRACTS OF JAPAN vol. 2003, no. 07, 3 July 2003 (2003-07-03) & JP 2003 080935 A (DENSO CORP), 19 March 2003 (2003-03-19)**

**Description**

The present invention relates to an air conditioning system for vehicles, and, more specifically, to an air conditioning system for vehicles which can appropriately reduce a displacement of a compressor at the time of acceleration without injuring a comfortableness and a drive feeling, and which can improve acceleration performance.

A technology for an air conditioning system for vehicles is known wherein a variable displacement compressor is provided to a refrigeration cycle, and by reducing the displacement of the compressor at the time of acceleration, a power required for driving the compressor is reduced, and a power corresponding to the reduction is utilized for driving the vehicle, thereby improving the acceleration performance of the vehicle (for example, JP-A-57-175422).

However, in such a conventional technology wherein the displacement of the compressor is reduced at the time of acceleration, there are the following two problems. One problem is that, because the displacement of the compressor is reduced at the time of acceleration irrelevant to control of air conditioning, there is a case where the temperature of air blown into a vehicle interior elevates up to an uncomfortable level, and it may damage the comfortableness of a crew. The other problem is that, when the displacement of the compressor is returned to a condition before the acceleration, a rapid variation of compressor torque may occur, and it may injure the drive feeling of the vehicle.

It would be desirable to provide an air conditioning system for vehicles, which can appropriately reduce a displacement of a compressor at the time of acceleration of a vehicle, thereby improving acceleration performance, and which can suppress a rapid or excessive variation of compressor torque, thereby preventing damage to drive feeling of a crew.

Further, it would be desirable to provide an air conditioning system for vehicles, which can suppress a rapid or excessive variation of compressor torque and prevent damage to drive feeling of a crew, when the displacement of the compressor is returned to a condition before acceleration after the displacement is reduced at the time of acceleration.

An air conditioning system for vehicles according to the present invention comprises a refrigeration cycle having a variable displacement compressor capable of changing a discharge amount of refrigerant, a condenser for condensing refrigerant, an expansion mechanism for expanding refrigerant and an evaporator for evaporating refrigerant, an evaporator temperature detecting means for detecting a temperature of air having passed through said evaporator or a surface temperature of the evaporator, an acceleration detecting means for detecting an acceleration condition of a vehicle, and an evaporator temperature control means for controlling so as to coincide a value detected by the evaporator temperature detecting means with a target evaporator temperature by controlling a displacement control signal outputted to the compressor, and is characterized in that the air conditioning system has an air conditioning control means for changing the target evaporator temperature in the evaporator temperature control means to a target evaporator temperature at acceleration time which is a value of not lower than a target evaporator temperature having been set before acceleration, when the acceleration detecting means detects an acceleration condition of the vehicle.

The displacement of the above-described variable displacement compressor can be controlled by the displacement control signal due to a feedforward control in response to the target evaporator temperature, and by appropriately setting the target evaporator temperature at acceleration time, the displacement of the compressor may be desirably reduced at the time of acceleration, thereby improving the acceleration performance of the vehicle. Further, because the target evaporator temperature at acceleration time is set at an adequate value, an excessive elevation of the temperature of air blown into a vehicle interior at the time of acceleration may be appropriately suppressed, thereby preventing a damage to the comfortableness of a crew.

In this air conditioning system for vehicles, it is preferred that the air conditioning control means gradually changes a target evaporator temperature to the target evaporator temperature having been set before acceleration, from a time immediately after the target evaporator temperature at acceleration time is set. By this, after the displacement of the compressor is reduced and the compressor torque is reduced at the time of acceleration, when the displacement of the compressor and the compressor torque are returned to the values before acceleration, generation of an excessive variation of compressor torque (a torque shock) may be prevented.

Further, it is preferred that, after the control changing the displacement control signal outputted to the compressor after the target evaporator temperature at acceleration time is set, the air conditioning control means prohibits to further reduce a displacement amount of the compressor from a displacement amount corresponding to the changed displacement control signal. By increasing the target evaporator temperature to the target evaporator temperature at acceleration time at the time of acceleration, the displacement of the compressor may be further reduced by feedback control in order to elevate the evaporator temperature up to this increased target value, but, if the displacement of the compressor is reduced excessively, the evaporator temperature may rise up to an unnecessary value, and therefore, the above-described control prevents such an inconvenience. Namely, when the displacement of the compressor is firstly reduced down to a value corresponding to the target evaporator temperature at acceleration time by feedforward control, a further reduction lower than the reduced value is prohibited. By this control, an excessive elevation of the evaporator temperature may be prevented, and a damage to the comfortableness of a crew may be prevented more surely.

Further, it is preferred that the target evaporator temperature at acceleration time is set supposing an upper limit of evaporator temperature which has no possibility to give an uncomfortable feeling to a crew. This target evaporator temperature at acceleration time can be set, for example, as a predetermined constant value within a range of about 10°C to about 15°C.

Further, it is preferred that, when the acceleration detecting means detects that the vehicle is not in an acceleration condition after the target evaporator temperature at acceleration time is set, a target evaporator temperature before acceleration is set as the target evaporator temperature in the evaporator temperature control means. Namely, this control is to quickly return the target evaporator temperature to the original value (the value before acceleration) at the time of finishing the acceleration, and by this control, the elevation of the evaporator temperature may be suppressed as little as possible.

Although the above-described acceleration detecting means is not particularly restricted, for example, it may be formed as means for detecting an acceleration condition referring to at least a signal of an accelerator opening degree of the vehicle and a signal of a vehicle running speed.

The above-described evaporator temperature control means may be formed, for example, as means for receiving a signal of a target value of a compressor torque or power from an engine electronic control unit (an engine ECU), and adjusting a displacement of the compressor so that the compressor torque or power becomes the target value, immediately after the target evaporator temperature is changed to the target evaporator temperature at acceleration time.

Thus, in the air conditioning system for vehicles according to the present invention, at the time of acceleration, by increasing the target evaporator temperature to the target evaporator temperature at acceleration time within a range capable of preventing elevation of the temperature of air blown into a vehicle interior up to an uncomfortable level, the displacement of the compressor can be adequately reduced and the acceleration performance of the vehicle can be improved, and because the temperature of air blown into the vehicle interior is set at a target evaporator temperature value (a target evaporator temperature value at acceleration time) that does not reach an uncomfortable level, the comfortableness also can be maintained.

Moreover, by gradually returning the target evaporator temperature to the original value before the acceleration, a damage to the drive feeling due to a rapid increase or rapid variation of the compressor torque can also be appropriately prevented. Therefore, a compressor control for improving the acceleration performance of a vehicle, which can solve the aforementioned two problems in the conventional technology, may be realized.

Further features and advantages of the present invention will be understood from the following detailed description of the preferred embodiments of the present invention with reference to the accompanying figures, of which:

Fig. 1 is a schematic diagram of an air conditioning system for vehicles according to an embodiment of the present invention.
Fig. 2 is a graph showing a relationship between a threshold value of an accelerator opening degree and a vehicle running speed in the control according to the present invention.
Fig. 3 is a flowchart showing an example of the control according to the present invention.
Figs. 4A-4C are graphs showing advantages by the control depicted in Fig. 3.
Fig. 5 is a flowchart showing another example of the control according to the present invention.

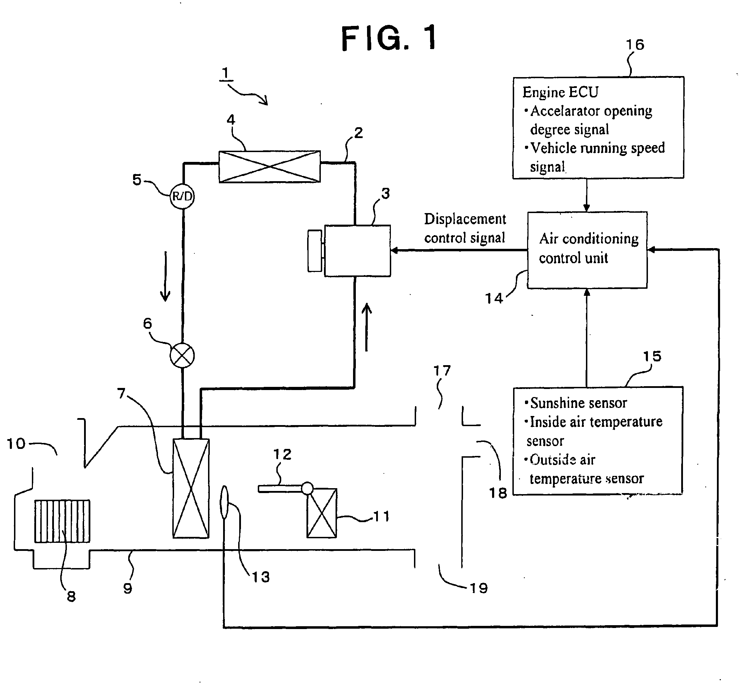

Fig. 1 depicts an air conditioning system for vehicles 1 according to an embodiment of the present invention. In Fig. 1, in a refrigeration cycle 2, a variable displacement compressor 3 capable of changing its discharge amount, which is driven by an engine for a vehicle, etc. (not shown), is provided, and the drive force of the engine is transmitted to the compressor via an electromagnetic clutch, etc. Refrigerant is circulated in the refrigerant tubes in refrigeration cycle 2, the high-temperature and high-pressure refrigerant compressed by compressor 3 is heat-exchanged with outside air by a condenser 4, cooled, condensed and liquefied. Gas-phase refrigerant and liquid-phase refrigerant are separated by a receiver drier 5, and the liquid refrigerant is expanded and reduced in pressure by an expansion mechanism 6 (an expansion valve). The low-pressure refrigerant reduced in pressure flows into an evaporator 7, and it is heat-exchanged with air sent by a blower 8. The refrigerant evaporated in evaporator 7 is sucked again into compressor 3 and compressed therein.

Blower 8 is disposed in an air duct 9 through which air for air conditioning of an interior of a vehicle passes, and air sucked from a suction port 10 is sent toward evaporator 7 by blower 8. A part of air having passed through evaporator 7 is sent to a heater unit 11 disposed downstream, and the rate of the amount of air passing through heater unit 11 to the amount of air bypassing heater unit 11 is adjusted by an air mixing damper 12. In this embodiment, an evaporator exit air temperature sensor 13 is provided at a position of an exit side of evaporator 7 for detecting a temperature of air after passing through evaporator 7, as an evaporator temperature detecting means for detecting a temperature of air having passed through the evaporator, and the signal of the detected temperature is sent to an air conditioning control unit 14 for controlling the air conditioning. An air conditioning control means for changing a target evaporator temperature in the evaporator temperature control means to a target evaporator temperature at acceleration time which is a value of not lower than a target evaporator temperature having been set before acceleration, according to the present invention, is incorporated into this air conditioning control unit 14, and this air conditioning control unit 14 also functions as a control unit for controlling the entire air conditioning for the vehicle in this embodiment.

To this air conditioning control unit 14, various signals except the signal of the temperature detected by the above-described evaporator exit air temperature sensor 13 are sent. In this embodiment, a group of signals 15 of at least a signal of a sunshine amount detected by a sunshine sensor, a signal of a temperature of a vehicle interior detected by an inside air temperature sensor and a signal of an outside air temperature detected by an outside air temperature sensor, and a group of signals 16 from an engine ECU (an engine electronic control unit) of at least a signal of an accelerator opening degree and a signal of a vehicle running speed, are inputted to air conditioning control unit 14. From air conditioning control unit 14, a displacement control signal is outputted to variable displacement compressor 3.

Respective air discharge ports 17, 18 and 19 such as a DEF-mode air discharge port, a VENT-mode air discharge port and a FOOT-mode air discharge port are provided at downstream positions of air duct 9, and these ports are selectively opened/closed by respective dampers (not shown).

In such an air conditioning system 1, the control according to the present invention will be carried out as follows.

Control method of evaporator temperature:

The evaporator temperature is controlled at a target evaporator temperature by a feedback control (FB control) of the evaporator temperature and a control of a displacement control signal due to a feedforward control (FF control). A feedback control input value is calculated by the following proportional and integral calculations, referring to a target evaporator temperature and an evaporator temperature.

$$\mathrm{Icfb = Pe + Ie}$$

Pe and Ie are calculated as follows.

$$\mathrm{Pe = Kp \times (Te - Tet)}$$

$$\mathrm{Ie = Ie_{n-1} + Kp/Ki \times (Te - Tet)}$$

Where,
Icfb: Calculated value of displacement control signal due to feedback control,
Pe: Calculated proportional value,
Ie: Calculated integral value,
$Ie_{n-1}$ : Last calculated value of Ie,
Kp: Proportional gain,
Ki: Integral time,
Tet: Target evaporator temperature, and
Te: Present value of evaporator temperature.

A feedforward control input value is calculated by the following equation, referring to a target evaporator temperature, an outside air temperature, a vehicle running speed and a blower voltage.

$$\mathrm{Icff = f(Tet, \ Tamb, \ VS, \ BLV)}$$

Where,
Icff: Calculated value of displacement control signal due to feedforward control,
Tamb: Outside air temperature,
VS: Vehicle running speed, and
BLV: Blower voltage.

Detection method of acceleration condition of a vehicle:

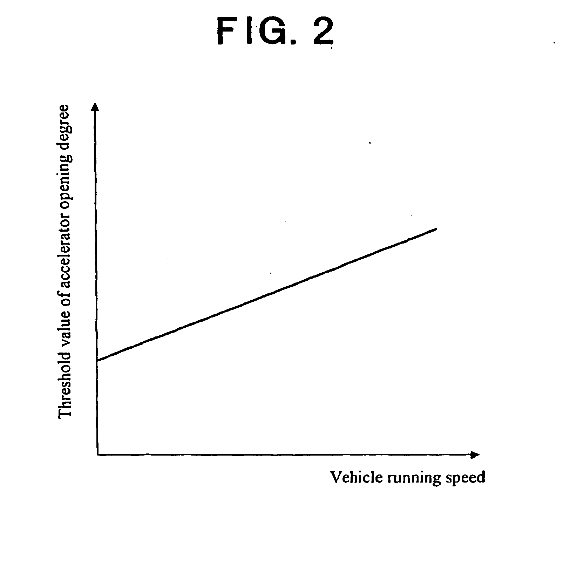

An acceleration condition of a vehicle is determined by judging a condition, where a signal of an accelerator opening degree is a certain threshold value or more, as an acceleration condition. However, because an accelerator opening degree at the time of a constant vehicle running speed becomes larger as a vehicle running speed increases, it is necessary to also increase the threshold value in response to increase of vehicle running speed. Therefore, the threshold value is set as a value determined in response to vehicle running speed, for example, as depicted in Fig. 2.

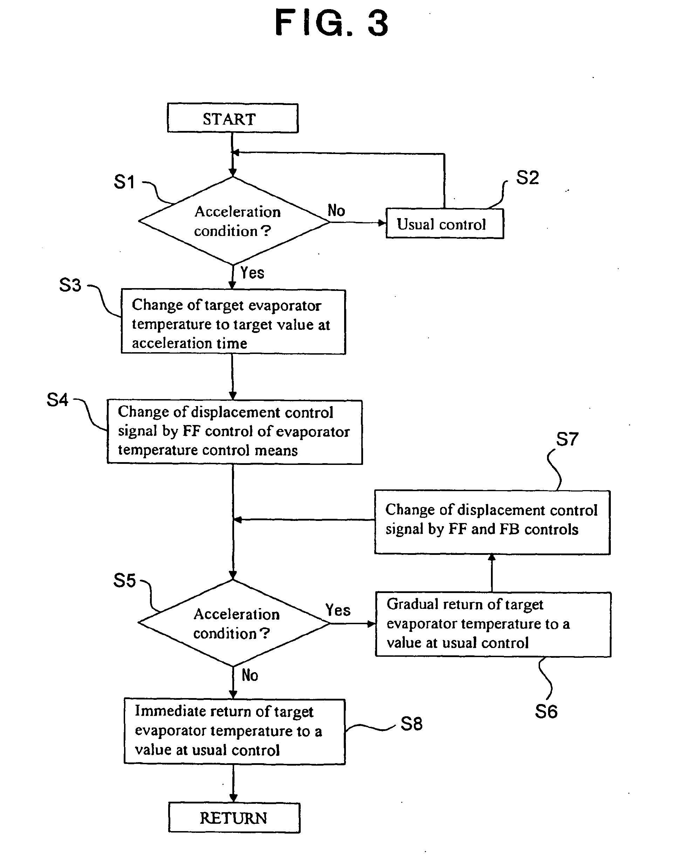

Fig. 3 shows an example of the control according to the present invention.

(1) Determination of acceleration:

It is determined whether the present condition is an acceleration condition or not at step S1. If it is determined that the present condition is not an acceleration condition, a usual control is carried out (step S2). In the usual control, a target evaporator temperature for realizing a vehicle interior temperature set by a crew is set, and an evaporator temperature is controlled.
If it is determined that the present condition is an acceleration condition, the target evaporator temperature is changed to a target evaporator temperature at acceleration time at step S3. The target evaporator temperature at acceleration time is set at an upper limit value within a range satisfying the following two items A and B (for example, it is desirable to set it at an adequate value in a range of about 10°C to about 15°C).

A. There is no generation of a bad smell ascribed to elevation of evaporator temperature.
B. If a short time, there is no fear to damage a comfortable feeling in temperature of a crew.

(2) Control during acceleration:

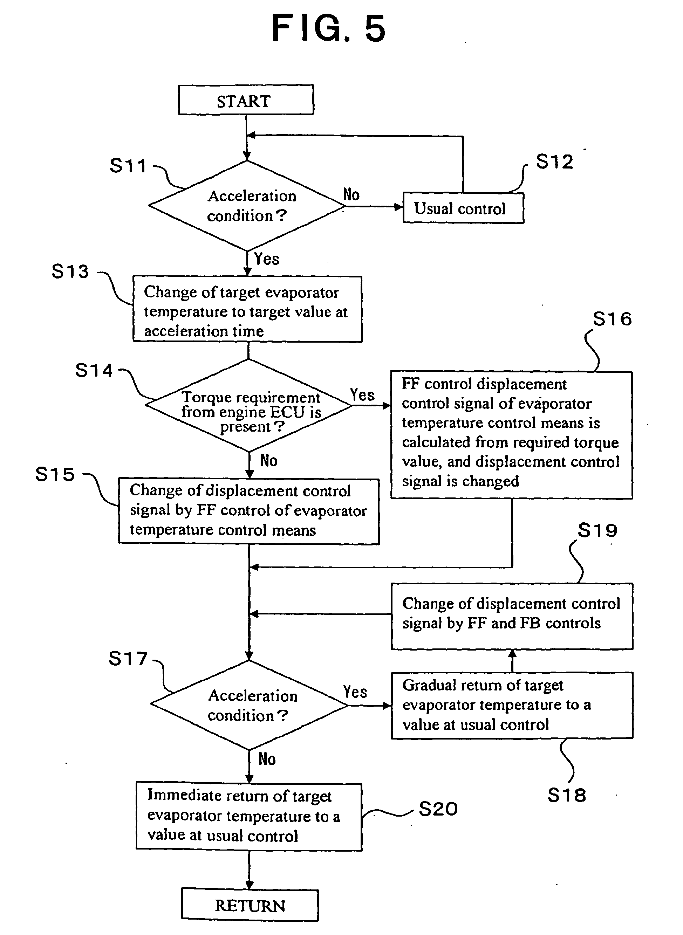

When the target evaporator temperature at acceleration time is set, a displacement control signal outputted to compressor 3 is immediately changed by the FF control of the evaporator temperature control means at step S4. Thereafter, during a period in that the present condition is determined to be an acceleration condition at step S5, the target evaporator temperature is gradually changed to an original target value of the usual control at step S6, and the displacement control signal is gradually changed by FF and FB controls at step S7. Further, even before the changed target evaporator temperature reaches the original target value, when the determination of acceleration condition is finished, the target evaporator temperature is immediately returned to a value of the usual control at step S8.

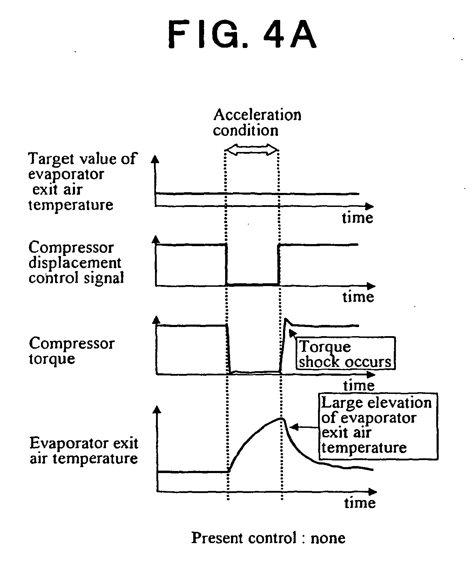

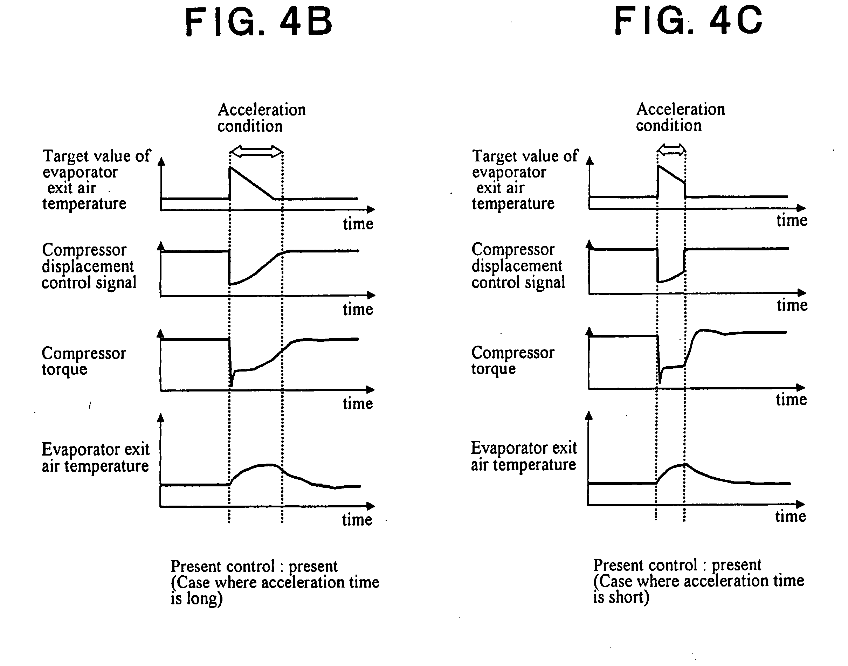

Figs 4A-4C show comparison between a case where the above-described control is present and a case where the control is not present (a conventional control).
As shown in Fig. 4A, in a case where the above-described control is not present, when an acceleration condition is detected, the compressor torque is changed to zero (or a minimum value) to improve the acceleration performance of a vehicle. However, in this case, the operation of the compressor becomes zero (or a minimum displacement), and there is a case where the evaporator temperature may elevate to an uncomfortable level for a crew. Further, because the compressor torque rapidly increases at the time of finishing the acceleration, a torque shock may occur and it may give a vibration feeling to a crew.
In a case where the above-described control is present, when an acceleration condition is detected, the evaporator temperature is set at a target evaporator temperature at acceleration time (in this embodiment, a target evaporator exit air temperature at acceleration time), the compressor torque is immediately reduced by the FF control of the evaporator temperature control means, and the acceleration performance of a vehicle is improved. Where, because the target evaporator temperature at acceleration time is set at a value that does not give an uncomfortable feeling to a crew as aforementioned, the evaporator exit air temperature, that is, the temperature of air blown into a vehicle interior, does not elevate up to an uncomfortable level for a crew. Further, after the compressor torque is reduced by the FF control, by prohibiting the reduced torque to further decrease, a rapid elevation of the evaporator temperature may be prevented. Thereafter, because the target evaporator temperature is gradually changed (the original target evaporator temperature is gradually changed at a predetermined variation rate) in order to return to the usual control condition, there is no rapid increase or variation of torque, and occurrence of a shock ascribed to an increase of torque may be prevented.
In a case where the acceleration time is short and the acceleration is finished during the period in which the target evaporator temperature is gradually returned, by immediately returning the target evaporator temperature to the usual control condition, elevation of the evaporator temperature may be suppressed at a minimum value.
Further, as aforementioned, when the target evaporator temperature is changed to the target evaporator temperature at acceleration time, the displacement control signal is controlled by the FF (feedforward) control in response to the target evaporator temperature, and the displacement of the compressor is controlled. In this control, as shown in Fig. 5, in a case where a target value of a compressor torque or power is outputted from the engine ECU, by controlling the displacement control signal due to the above-described feedforward control at a value in response to the target value of compressor torque or power outputted from the engine ECU, it becomes possible to reduce the displacement of the compressor to a displacement required by an engine at the time of acceleration.

The target value of the feedforward control displacement control signal, when a target value of a compressor torque or power is outputted from the engine ECU, can be calculated by the following equation.

$$TargetFF = f\,(EcuTrq,\,Nc,\,Tamb)$$

or,

$$TargetFF = f(EcuTrq,\,Nc,\,Tamb,\,Pd)$$

Where,
TargetFF: Target value of feedforward control displacement control signal,
EcuTrq: Target torque value outputted from engine ECU,
Tamb: Outside air temperature,
Nc: Rotational speed of compressor (or rotational speed of engine), and
Pd: High-pressure side refrigerant pressure.

In Fig. 5, it is determined whether a torque requirement form the engine ECU is present or not at step 14. If the torque requirement is present, the FF control displacement control signal of the evaporator temperature control means is calculated from the required torque value, and the displacement control signal is changed at step 16. Steps 11, 12, 13, 15, 17, 18, 19 and 20 in Fig. 5 correspond to steps 1, 2, 3, 4, 5, 6, 7 and 8 in Fig. 3, respectively.

The above-described control according to the present invention can be applied to any air conditioning system for vehicles having a refrigeration cycle comprising a variable displacement compressor, and by the control, the acceleration performance of the vehicle can be improved while a desired condition for the air conditioning can be maintained.

## Claims

1.  An air conditioning system for vehicles comprising a refrigeration cycle having a variable displacement compressor capable of changing a discharge amount of refrigerant, a condenser for condensing refrigerant, an expansion mechanism for expanding refrigerant and an evaporator for evaporating refrigerant, an evaporator temperature detecting means for detecting a temperature of air having passed through said evaporator cr a surface temperature of said evaporator, an acceleration detecting means for detecting an acceleration condition of a vehicle, and an evaporator temperature control means for controlling so as to coincide a value detected by said evaporator temperature detecting means with a target evaporator temperature by controlling a displacement control signal outputted to said compressor, **characterized in that** said air conditioning system has an air conditioning control means for changing said target evaporator temperature in said evaporator temperature control means to a target evaporator temperature at acceleration time which is a value of not lower than a target evaporator temperature having been set before acceleration, when said acceleration detecting means detects an acceleration condition of said vehicle.

2.  The air conditioning system according to claim 1, wherein said air conditioning control means gradually changes a target evaporator temperature to said target evaporator temperature having been set before acceleration, from a time immediately after said target evaporator temperature at acceleration time is set.

3.  The air conditioning system according to claim 1 or 2, wherein, after control changing said displacement control signal outputted to said compressor after said target evaporator temperature at acceleration time is set, said air conditioning control means prohibits to further reduce a displacement amount of said compressor from a displacement amount corresponding to the changed displacement control signal.

4.  The air conditioning system according to any preceding claim, wherein said target evaporator temperature at acceleration time is set supposing an upper limit of evaporator temperature which has no possibility to give an uncomfortable feeling to a crew.

5. The air conditioning system according to any preceding claim, wherein, when said acceleration detecting means detects that said vehicle is not in an acceleration condition after said target evaporator temperature at acceleration time is set, a target evaporator temperature before acceleration is set as said target evaporator temperature in said evaporator temperature control means.

6. The air conditioning system according to any preceding claim, wherein said acceleration detecting means detects an acceleration condition referring to at least a signal of an accelerator opening degree of said vehicle and a signal of a vehicle running speed.

7. The air conditioning system according to any preceding claim, wherein said evaporator temperature control means receives a signal of a target value of a compressor torque or power from an engine electronic control unit, and adjusts a displacement of said compressor so that said compressor torque or power becomes said target value, immediately after said target evaporator temperature is changed to said target evaporator temperature at acceleration time.

**Patentansprüche**

1. Klimaanlagensystem für Fahrzeuge, aufweisend
einen Kühlkreislauf mit einem verstellbaren Kompressor, der in der Lage ist, eine Kältemittelauslassmenge zu verändern,
einen Kondensator zum Kondensieren von Kältemittel,
einen Expansionsmechanismus, um Kältemittel zu entspannen und einen Verdampfer, um Kältemittel zu verdampfen,
ein Verdampfertemperaturerfassungsmittel, zum Erfassen einer Temperatur von Luft, die den Verdampfer durchströmt hat, oder einer Oberflächentemperatur des Verdampfers,
ein Beschleunigungserfassungsmittel, zum Erfassen eines Beschleunigungszustands eines Fahrzeugs
und ein Verdampfertemperatursteuerungsmittel, um einen, durch das Verdampfertemperaturerfassungsmittel erfassten Wert, durch Steuerung eines an den Kompressor ausgegebenen Verdrängungssteuerungssignals so zu steuern, dass er mit dampfersolltemperatur zusammenfällt,
**dadurch gekennzeichnet, dass**
das Klimaanlagensystem ein Klimaregelungsmittel hat, um, wenn das Beschleunigungserfassungsmittel einen Beschleunigungszustand des Fahrzeugs ermittelt, den Verdampfertemperatursollwert in dem Verdampfertemperatursteuerungsmittel auf eine Beschleunigungszeitverdampfersolltemperatur zu verändern, wobei dieser ein Wert ist, der nicht niedriger ist, als eine Verdampfersolltemperatur, die vor der Beschleunigung eingestellt war.

2. Klimaanlagensystem gemäß Anspruch 1, wobei das Klimaregelungsmittel, ab dem Zeitpunkt, sofort nach dem die Beschleunigungszeitverdampfersolltemperatur eingestellt wird, eine Verdampfersolltemperatur allmählich auf die Verdampfersolltemperatur, die vor der Beschleunigung eingestellt war, ändert.

3. Klimaanlagensystem gemäß Anspruch 1 oder 2, wobei, nachdem eine Steuerung das Verdrängungssteuerungssignal, das zu dem Kompressor ausgegeben wird, nachdem die Beschleunigungszeitverdampfersolltemperatur eingestellt ist, ändert, das Klimaregelungsmittel eine weitere Reduzierung der Verdrängungsmenge des Kompressors, über eine Verdrängungsmenge, die dem geänderten Verdrängungssteuerungssignals entspricht, hinaus, verhindert.

4. Klimaanlagensystem gemäß einem der vorangehenden Ansprüche, wobei die Beschleunigungszeitverdampfersolltemperatur so eingestellt wird, dass sie eine obere Grenze der Verdampfertemperatur annimmt, die es nicht ermöglicht, ein unbehagliches Gefühl bei einer Besatzung zu erzeugen.

5. Klimaanlagensystem gemäß einem der vorangehenden Ansprüche, wobei, wenn das Beschleunigungserfassungsmittel erfasst, dass das Fahrzeug, nachdem die Beschleunigungszeitverdampfersolltemperatur eingestellt ist, nicht in einem Beschleunigungszustand ist, eine Verdampfersolltemperatur vor Beschleunigung als Verdampfersolltemperatur in dem Verdampfertemperatursteuerungsmittel eingestellt wird.

6. Klimaanlagensystem gemäß einem der vorangehenden Ansprüche, wobei das Beschleunigungserfassungsmittel einen Beschleunigungszustand, bezüglich zumindest eines Signals von einem Gaspedalöffnungsgrad des Fahrzeugs und eines Signals einer Fahrzeuggeschwindigkeit, erfasst.

**7.** Klimaanlagensystem gemäß einem der vorangehenden Ansprüche, wobei das Verdampfertemperatursteuerungsmittel ein Signal eines Sollwerts, eines Kompressordrehmoments oder einer -leistung, von einer Motorelektroniksteuerungseinheit empfängt und, sofort nachdem die Verdampfersolltemperatur auf die Beschleunigungszeitverdampfersolltemperatur geändert ist, eine Verdrängung des Kompressors so einstellt, dass das Kompressordrehmoment oder die -leistung den Sollwert annimmt.

**Revendications**

**1.** Installation de climatisation pour véhicules, comprenant un cycle de réfrigération et comportant :

- un compresseur à déplacement variable capable de modifier une quantité de décharge de réfrigérant,
- un condenseur pour condenser le réfrigérant,
- un mécanisme d'expansion pour dilater le réfrigérant,
- un évaporateur pour évaporer le réfrigérant,
- un moyen de détection de la température de l'évaporateur pour détecter la température de l'air l'ayant traversé ou sa température de surface,
- un moyen de détection pour détecter un état d'accélération du véhicule, et
- un moyen de commande de la température de l'évaporateur pour la contrôler de manière à faire coïncider une valeur détectée par le moyen de détection de température d'évaporateur, avec une température d'évaporateur ciblée, en contrôlant un signal de commande de déplacement fourni en sortie au compresseur,

**caractérisé en ce qu'**
elle comporte un moyen de commande de la climatisation destiné à changer la température ciblée de l'évaporateur dans le moyen de commande de température d'évaporateur, en une température d'évaporateur ciblée à un moment d'accélération, qui correspond à une valeur non inférieure à une température d'évaporateur ciblée ayant été réglée avant l'accélération, lorsque le moyen de détection détecte un état d'accélération du véhicule.

**2.** Installation de climatisation selon la revendication 1,
dans laquelle
le moyen de commande de climatisation change progressivement une température d'évaporation ciblée, en température d'évaporation ciblée ayant été réglée avant l'accélération, à partir d'un moment venant juste après le réglage de la température de l'évaporateur ciblée au moment de l'accélération.

**3.** Installation de climatisation selon la revendication 1 ou 2,
dans laquelle
après la commande changeant le signal de commande de déplacement fourni en sortie au compresseur après le réglage de la température d'évaporateur ciblée au moment de l'accélération, le moyen de commande de climatisation empêche une réduction supplémentaire du déplacement du compresseur à partir d'un déplacement correspondant au signal de commande de changement du déplacement.

**4.** Installation de climatisation selon l'une des revendications précédentes,
dans laquelle
la température de l'évaporateur ciblée au moment d'une accélération est réglée en supposant une limite supérieure de la température d'évaporateur qui n'offre aucune possibilité de donner une sensation inconfortable aux passagers.

**5.** Installation de climatisation selon l'une des revendications précédentes, dans laquelle
lorsque le moyen de détection d'accélération détecte que le véhicule ne se trouve pas dans un état d'accélération après le réglage de la température d'évaporateur ciblée au moment de l'accélération, une température d'évaporateur ciblée avant l'accélération est réglée en tant que température d'évaporateur ciblée dans le moyen de commande de la température de l'évaporateur.

**6.** Installation de climatisation selon l'une des revendications précédentes,
dans laquelle
le moyen de détection détecte un état d'accélération en se référant à au moins un signal de degré d'ouverture de l'accélérateur du véhicule, et au moins à un signal de vitesse du véhicule.

**7.** Installation de climatisation selon l'une des revendications précédentes,

dans laquelle
le moyen de commande de la température de l'évaporateur reçoit un signal de valeur ciblée d'un couple ou d'une puissance de compresseur, ce signal provenant d'un bloc de commande électronique du moteur, et il règle le déplacement du compresseur de façon que le couple ou la puissance du compresseur arrivent à la valeur ciblée, juste après le changement de la température de l'évaporateur ciblée pour arriver à la température d'évaporateur ciblée au moment de l'accélération.

# FIG. 1

Engine ECU
- Accelarator opening degree signal
- Vehicle running speed signal

Displacement control signal

Air conditioning control unit

- Sunshine sensor
- Inside air temperature sensor
- Outside air temperature sensor

EP 1 623 861 B1

# FIG. 2

Threshold value of accelerator opening degree

Vehicle running speed

# FIG. 3

```
                    ┌──────────────┐
                    │    START     │
                    └──────────────┘
                           │
                           ▼
  S1                  ╱─────────╲           No          S2
                    ╱ Acceleration ╲  ──────────────▶  ┌──────────────┐
                    ╲  condition ?  ╱                  │ Usual control │
                      ╲─────────╱                      └──────────────┘
                           │ Yes
                           ▼
  S3         ┌──────────────────────────────┐
             │ Change of target evaporator  │
             │ temperature to target value at│
             │ acceleration time             │
             └──────────────────────────────┘
                           │
                           ▼
  S4         ┌──────────────────────────────┐
             │ Change of displacement control│                        S7
             │ signal by FF control of evaporator│    ┌──────────────────────────────┐
             │ temperature control means     │        │ Change of displacement control│
             └──────────────────────────────┘        │ signal by FF and FB controls  │
                           │             ◀────────────└──────────────────────────────┘
                           │                                          ▲
                           ▼                                          │
  S5              ╱─────────╲        Yes      ┌──────────────────────────────┐
                ╱ Acceleration ╲ ───────────▶ │ Gradual return of target      │
                ╲  condition ?  ╱             │ evaporator temperature to a   │
                  ╲─────────╱                 │ value at usual control        │
                       │ No                   └──────────────────────────────┘
                       ▼                                         S6
        ┌──────────────────────────┐
        │ Immediate return of target│     S8
        │ evaporator temperature to a│
        │ value at usual control    │
        └──────────────────────────┘
                       │
                       ▼
                ┌──────────────┐
                │    RETURN     │
                └──────────────┘
```

# FIG. 4A

Present control : none

# FIG. 4B         FIG. 4C

Present control : present
(Case where acceleration time
is long)

Present control : present
(Case where acceleration time
is short)

# FIG. 5

```
                          ┌──────────┐
                          │  START   │
                          └────┬─────┘
                               │
          S11                  ▼                        S12
              ╱◇╲        No   ┌──────────────┐
         ╱ Acceleration ╲────▶│ Usual control│
         ╲ condition?   ╱     └──────────────┘
              ╲◇╱
               │ Yes
               ▼
  S13  ┌──────────────────────────┐
       │ Change of target evaporator│
       │ temperature to target value│
       │ at acceleration time       │
       └────────────┬───────────────┘
                    │
  S14               ▼                                    S16
          ╱◇╲                    ┌──────────────────────────────┐
     ╱ Torque requirement ╲ Yes  │ FF control displacement       │
     ╲ from engine ECU is  ╱─────▶│ control signal of evaporator   │
     ╲  present?          ╱       │ temperature control means is   │
          ╲◇╱                     │ calculated from required torque│
           │ No                   │ value, and displacement control│
  S15      ▼                      │ signal is changed              │
   ┌──────────────────────────┐   └───────────────┬──────────────┘
   │ Change of displacement    │                   │
   │ control signal by FF control│                 │
   │ of evaporator temperature  │                  │
   │ control means              │                  │
   └────────────┬───────────────┘                  │
                │◀─────────────────────────────────┘
                │                              S19
                │◀──────────┌──────────────────────────┐
                │           │ Change of displacement    │
                │           │ control signal by FF and  │
                │           │ FB controls               │
                │           └──────────▲───────────────┘
  S17           ▼                      │
          ╱◇╲              ┌──────────────────────────┐
     ╱ Acceleration ╲ Yes  │ Gradual return of target  │
     ╲ condition?   ╱─────▶│ evaporator temperature to │
          ╲◇╱              │ a value at usual control  │
           │ No            └──────────────────────────┘
           ▼                              S18
   ┌──────────────────────────┐
   │ Immediate return of target│   S20
   │ evaporator temperature to │
   │ a value at usual control  │
   └────────────┬───────────────┘
                ▼
           ┌──────────┐
           │  RETURN  │
           └──────────┘
```

**EP 1 623 861 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 57175422 A